# EUROPEAN PATENT SPECIFICATION

(11) **EP 2 800 645 B1**
(45) Date of publication and mention of the grant of the patent: **20.04.2016**
(21) Application number: 12701215.1
(22) Date of filing: 03.01.2012
(51) Int. Cl.: B23B 51/04

(54) **MULTI-POSITION HOLE SAW ASSEMBLY WITH PLUG EJECTOR**
VERSTELLBARE LOCHSÄGE ANORDNUNG MIT AUSWERFER
DISPOSITIF DE SCIE-CLOCHE AJUSTABLE EN POSITIONS MULTIPLES, AVEC ÉJECTEUR DE MATÉRIEL DÉCOUPÉ

(43) Date of publication of application: 12.11.2014
(73) Proprietor: Føvling Træbyg Aps, 6683 Føvling (DK)
(72) Inventor: VIUF, Erling, DK-6683 Føvling (DK)
(74) Representative: Patentgruppen
(86) International application number: PCT/DK2012/050003
(87) International publication number: WO 2013/102461

(56) References cited:
- WO-A1-99/02292
- WO-A1-2006/062388
- US-A- 5 096 341
- US-A- 5 226 762
- US-A1- 2010 047 030
- US-A1- 2010 086 372
- US-B2- 6 623 220

## Description

The present invention relates to a hole saw assembly according to the preamble of claim 1.

### Background of the invention

Such an assembly is known from US 5 226762A, US 2010/047030 A1, US 2010/ 086372 A1, WO 99/02292 A1, WO 2006/062388 A1, US 5096341A and US 6623220 B2.

When using a traditional turning hole saw of the type with a central drill surrounded by a circular saw blade, the distance, by which the central drill protrudes from the plane defined by the cutting edge of the saw blade, can be rather critical under certain circumstances.

If the central drill protrudes too much, the drill may cause damage to electrical fittings, water pipes or other hidden structures behind the plate, through which the hole is to be made, before the saw blade has worked its way through the plate.

If, on the other hand, the protrusion of the central drill is too short, and the hole is to be made at a joint between two bevelled plates, such as well-known types of ceiling sheets, the central drill may not be able to catch the plate material and work as a guide for the sawing with the circular saw blade, as is the intention with this type of hole saws.

Another well-known problem is that, after having made the hole, it can be rather difficult to remove the plug of material, which is sawn out, from the hole saw.

### Brief description of the invention

It is an object of the present invention to provide an improved hole saw, which overcomes the above-identified problems of hole saws known in the art.

The present invention relates to a hole saw assembly comprising an elongated arbor having a machine end and a tool end, the machine end being suitable for being mounted at into a power tool or a drill chuck of a drilling machine, a mounting piece arranged around the arbor so that the mounting piece is rotationally locked to the arbor but slidable over the arbor in the longitudinal direction thereof, a circular saw blade mounted on the mounting piece with the cutting edge of the circular saw blade directed towards the tool end of the arbor and so that the rotational axis of the circular saw blade coincides with the longitudinal axis of the arbor, a central drill extending along the rotational axis of the circular saw blade and being rotationally and axially fixed to the arbor, means for releasably fixating the mounting piece in relation to the arbor at one or more positions along the longitudinal axis of the arbor and a plug ejector mounted on the central drill in such a way that the plug ejector may be used for ejecting a plug of sawn material from the interior of the circular saw blade by sliding the mounting piece and the circular saw blade in relation to the central drill in the direction towards the machine end of the arbor, and in such a way that the plug ejector may work as a stop for the sliding of the mounting piece towards the tool end of the arbor.

A hole saw assembly according to the present invention is advantages in that it provides a simple and reliable system for ejecting a plug of sawn material from the hole saw and also allows for an easy and fast positioning of the hole saw in relation to the arbor and the central drill in one or more predefined positions. A further advantage is that the same drill may be used for hole saws with different diameters.

In an embodiment of the invention, the mounting piece may be releasably fixed at a first mounting piece position along the longitudinal axis of the arbor, in which the central drill protrudes between 5 mm and 30 mm, preferably between 15 mm and 20 mm, from the plane defined by the cutting edge of the circular saw blade.

This first mounting piece position corresponds to a normal operational configuration, in which the central drill protrudes sufficiently from the plane defined by the cutting edge of the saw blade to catch the plate material and work as a guide for the sawing with the circular saw blade.

In an embodiment of the invention, the mounting piece may further be releasably fixed at a second mounting piece position along the longitudinal axis of the arbor, in which the central drill protrudes between 20 mm and 75 mm, preferably between 30 mm and 40 mm, from the plane defined by the cutting edge of the circular saw blade.

This second mounting piece position corresponds to a special operational configuration, in which the protrusion of the central drill is extended, which may be useful, for instance, if the hole is to be made at a joint between two bevelled plates.

In an embodiment of the invention, the mounting piece may further be releasably fixed at a third mounting piece position along the longitudinal axis of the arbor, in which the central drill does not protrude from the plane defined by the cutting edge of the circular saw blade.

This third mounting piece position corresponds to a safety configuration, into which the hole saw assembly may be put as soon as the circular saw blade has started cutting its way through the material in which the hole is to be sawn and the guidance from the central drill is less important. When the central drill does not protrude from the circular saw blade, it is much easier to avoid that the drill may cause damage to electrical fittings, water pipes or other hidden structures behind the plate through which the hole is sawn.

In an embodiment of the invention, the means for fixating the mounting piece in relation to the arbor comprises one or more fixation elements, each being positionable in at least two different positions, a first of which positions causes the tool fixation element to protrude into a fixation recess on the surface of the arbor, and a second of which positions causes the tool fixation element not to protrude into such a recess.

Using one or more fixation elements, which can be moved forth and back between a protruding "lock" position and a retracted "open" position, is a simple and reliable way of configuring releasable fixation means.

In an embodiment of the invention, at least one of the fixation elements is a spring-loaded ball or a spring-loaded pin.

Spring-loaded balls and pins are simple and reliable fixation elements suitable for being used in releasable fixation means.

In an embodiment of the invention, the position of at least one of the fixation elements is controlled by means of an locking sleeve, which is slidable in the longitudinal direction of the arbor, which locking sleeve comprises one or more fixation element recesses arranged in such a way that, when the fixation element is aligned with a fixation element recess, it is allowed to be in the second position, whereas, when the fixation element is not aligned with a fixation element recess, the fixation element is kept in the first position, thus fixating the mounting piece in the longitudinal direction of the arbor.

The use of a slidable sleeve with one or more recesses is a simple and reliable method for controlling the positions of one or more fixation elements used in releasable fixation means.

In an embodiment of the invention, the position of at least one of the fixation elements is controlled by means of an locking sleeve, which is rotatable about the arbor, which locking sleeve comprises one or more fixation element recesses arranged in such a way that, when the fixation element is aligned with a fixation element recess, it is allowed to be in the second position, whereas, when the fixation element is not aligned with a fixation element recess, the fixation element is kept in the first position, thus fixating the mounting piece in the longitudinal direction of the arbor.

The use of a rotatable sleeve with one or more recesses is another simple and reliable method for controlling the positions of one or more fixation elements used in releasable fixation means.

In an embodiment of the invention, the position of at least one of the fixation elements is controlled by means of a finger screw, the rotational axis of which is perpendicular to the arbor, the finger screw being arranged so that, when the finger screw is loosened, the fixation element is allowed to be in the second position, whereas, when the finger screw is tightened, the fixation element is kept in the first position, thus fixating the mounting piece in the longitudinal direction of the arbor.

The use of a finger screw is yet a simple and reliable method for controlling the positions of one or more fixation elements used in releasable fixation means.

In an embodiment of the invention, the means for releasably fixating the mounting piece in relation to the arbor include the plug ejector, the fixation being obtained by inserting the machine end of the arbor into a power tool or a drill chuck of a drilling machine until the mounting piece abuts the power tool or drill chuck and the mounting piece is wedged in between the plug ejector at one end and the power tool or the drill chuck at the other end.

This configuration is advantageous in that it is very simple in its contruction.

In an embodiment of the invention, the hole saw assembly further comprises a pivotal bracket mounted on the mounting piece, the pivot of the bracket being perpendicular to the longitudinal axis of the arbor and the pivotal bracket being positionable in at least two different bracket positions, so that when the bracket is in a first bracket position substantially parallel to the arbor, the bracket constitutes an extension of the mounting piece in the direction of the machine end of the arbor in such a way that the mounting piece may be fixed in relation to the arbor by inserting the machine end of the arbor into a power tool or a drill chuck of a drilling machine until the bracket abuts the power tool or drill chuck and the mounting piece and the bracket extending it are wedged in between the plug ejector at one end and the power tool or the drill chuck at the other end, and that when the bracket is moved into a second bracket position without releasing the arbor from the power tool or the drill chuck, the mounting piece may slide along the arbor between the ejector plug and the power tool or drill chuck.

This embodiment is a little less simple than the previous one, but it allows for using the plug ejector without removing the hole saw assembly from the power tool or drilling machine.

In an embodiment of the invention, the fixation element is a pivotal bracket mounted on the mounting piece, the pivot of the bracket being perpendicular to the longitudinal axis of the arbor and the pivotal bracket being positionable in at least two different bracket positions, so that when the bracket is in a first bracket position substantially parallel to the arbor, the bracket constitutes an extension of the mounting piece in the direction of the machine end of the arbor and a part of the bracket protrudes into a fixation recess on the surface of the arbor in such a way that the mounting piece is fixed in relation to the arbor in the longitudinal direction thereof, and that when the bracket is moved into a second bracket position, the bracket does not protrude into such a recess and the mounting piece is allowed to slide along the arbor.

This embodiment is advantageous in that it combines the simple construction comprising a pivotal bracket with the possibility of releasably fixing the mounting piece to the arbor in different longitudinal positions thereof.

In an embodiment of the invention, the ejector plug is fixed to the central drill.

For simple embodiments with only one fixed mounting piece position, a fixed ejector plug is advantageous for use as a stop for the sliding of the mounting piece along the arbor.

In an embodiment of the invention, the ejector plug is formed as an integral part of the central drill.

In order to reduce the number of parts and for stability reasons, it may be advantageous to produce the ejector plug as part of the central drill.

In an embodiment of the invention, the ejector plug is slidable along a part of the central drill.

For embodiments with more than one fixed mounting piece position, it may is advantageous that the ejector plug can slide for a certain distance along the central drill, if it is to be used both as ejector plug and as stop for the sliding of the mounting piece along the arbor.

In an embodiment of the invention, the central drill is formed as an integral part of the arbor, the central drill being an extension of the arbor at the tool end thereof.

In order to reduce the number of parts and for stability reasons, it may be advantageous to produce the central drill as part of the arbor.

In an embodiment of the invention, a cross-section of at least a part of the arbor has a hexagonal shape, and the mounting piece is rotationally locked to the arbor by means of a central hole through the mounting piece, the shape and dimensions of which hole corresponds to the shape and dimensions of the cross-section of the arbor. Hexagonal cross-sections are advantages both for assuring the rotational locking of the mounting piece to the arbor and for mounting the arbor in a power tool or in the drill chuck of a drilling machine.

### Figures

A few exemplary embodiments of the invention will be described in further detail in the following with reference to the figures, of which
- fig. 1a: is a schematic side view of a hole saw assembly according to an embodiment of the invention, the hole saw assembly being configured in a first mode,
- fig. 1b: is a schematic side view from another side of the hole saw assembly shown in fig. 1a,
- fig. 2a: is a schematic side view of the hole saw assembly shown in fig. 1a, the hole saw assembly being configured in a second mode,
- fig. 2b: is a schematic side view from another side of the hole saw assembly shown in fig. 2a,
- fig. 3: is a schematic cross-sectional view of a first variation of the hole saw assembly as shown in fig. 1b,
- fig. 4: is a schematic cross-sectional view of a second variation of the hole saw assembly as shown in fig. 1b,
- fig. 5: is a schematic cross-sectional view of a hole saw assembly according to another embodiment of the invention,
- fig. 6a: is a schematic side view of a hole saw assembly according to another embodiment of the invention, the hole saw assembly being configured in a first mode,
- fig. 6b: is a schematic side view of the hole saw assembly shown in fig. 6a, the hole saw assembly being configured in a second mode,
- fig. 6c: is a schematic side view of the hole saw assembly shown in figs. 6a and 6b, the hole saw assembly being configured in a third mode,
- fig. 6d: is a schematic side view of the hole saw assembly shown in figs. 6a, 6b and 6c, the hole saw assembly being configured in a fourth mode,
- fig. 7: is a schematic side view of a hole saw assembly according to yet another embodiment of the invention,
- fig. 8: is a schematic cross-sectional view of the hole saw assembly as shown in fig. 7,
- fig. 9a: is a schematic cross-sectional view of a mounting piece position locking system for a hole saw assembly according to an embodiment of the invention, the locking system being in its locked position,
- fig. 9b: is a schematic cross-sectional view of the same mounting piece position locking system as shown in fig. 9a, the locking system being in its unlocked position,
- fig. 10a: is a schematic cross-sectional view of a mounting piece position locking system for a hole saw assembly according to another embodiment of the invention, the locking system being in its locked position,
- fig. 10b: is a schematic cross-sectional view of the same mounting piece position locking system as shown in fig. 10a, the locking system being in its unlocked position,
- fig. 11a: is a schematic cross-sectional view of a mounting piece position locking system for a hole saw assembly according to yet another embodiment of the invention, the locking system being in its locked position, and
- fig. 11b: is a schematic cross-sectional view of the same mounting piece position locking system as shown in fig. 11a, the locking system being in the process of changing from its locked position to its unlocked position.

### Detailed description of the invention

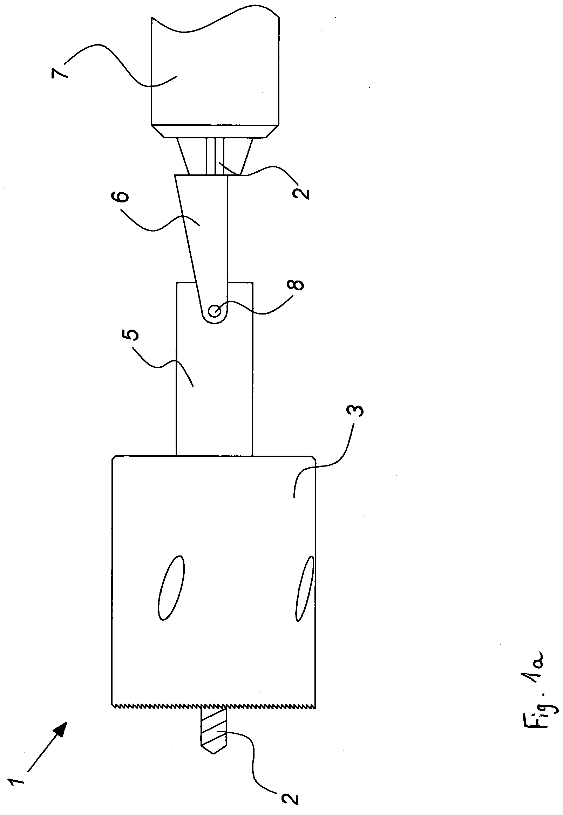

Figs. 1a-2b are different side views of a hole saw assembly 1 according to an embodiment of the invention, the hole saw assembly 1 being configured in two different modes.

The hole saw assembly 1 illustrated in these figures comprises a circular saw blade 3, which is firmly mounted on and fixed to a mounting piece 5, and a through-going central drill 2 having a tool end and a machine end. The circular saw blade 3 is arranged so that its rotational axis coincides with the rotational axis of the through-going central drill 2.

The through-going central drill 2 forms at its tool end a drill 2, which protrudes a bit from the plane defined by the cutting edge of the circular saw blade 3. This means that the drill 2 can be drilled into the material at the centre point of the hole to be drilled and used as a guide for the actual sawing with the circular saw blade 3. At its machine end, on the other hand, the through-going central drill 2 has a hexagonal cross-sectional shape, making the through-going central drill 2 suitable for being firmly mounted in a power tool or the drill chuck 7 of a drilling machine. The dimensions of this hexagonal part of the through-going central drill 2 may typically correspond to the dimension of well-known drill bits (about 7 mm) so that the through-going drill 2 is suitable for being mounted in a common power tool. In other embodiments, however, the cross-sectional dimensions, at least of a part of the hexagonal part of the through-going central drill, may be otherwise, such as around 10 mm, which is a preferred size for mounting in the drill chuck 7 of a drilling machine.

The hexagonal cross-sectional shape of the through-going central drill 2 is also used for rotationally locking the mounting piece 5 and, thereby, the circular saw blade 3 to the through-going central drill 2. The mounting piece 5 has a through-going hole, the shape and dimensions of which correspond to the hexagonal cross-sectional shape of the machine end part of the through-going central drill 2. This means that, when the mounting piece 5 is placed around the machine end of the through-going central drill 2, the mounting piece 5 is rotationally locked to the through-going central drill 2 but able to slide along the through-going central drill 2 in the longitudinal direction thereof. In any of the illustrated embodiments, one or more locking rings (not shown) may be arranged inside the mounting piece 5 for interacting with one or more small notches (not shown) at the edges of the central drill 2, 9 or hexagonal arbor 14, in order to keep the mounting piece 5 from sliding along the drill 2, 9 or arbor 14, unless it is slid deliberately by means of a hand or a finger.

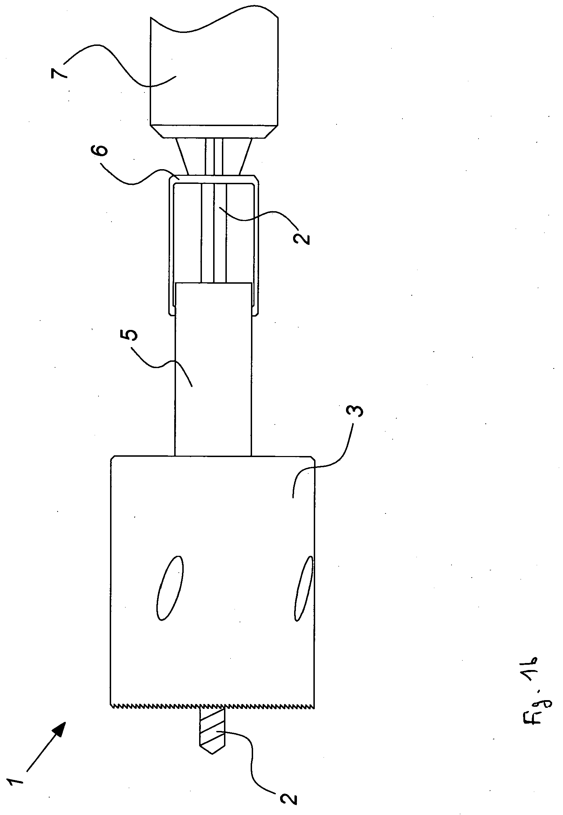

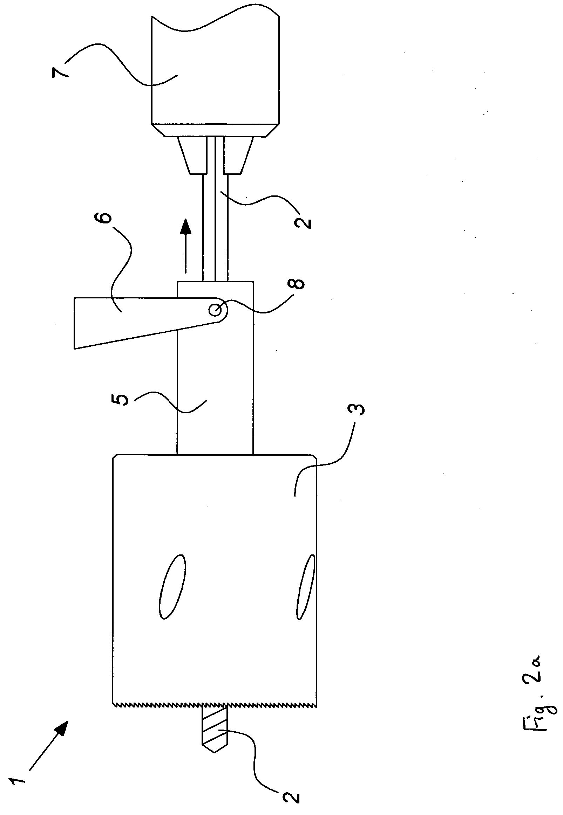

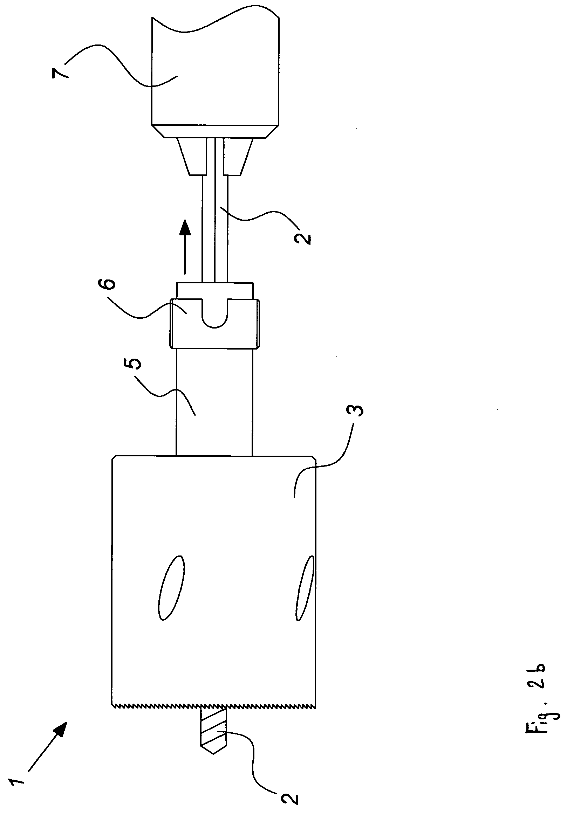

The embodiment of the saw blade assembly 1 illustrated in these figures further comprises a pivotal bracket 6 mounted on the mounting piece 5. The pivot 8 of the bracket 6 being perpendicular to the longitudinal axis of the through-going central drill 2, the pivotal bracket 6 may be positioned in at least two different bracket positions, the first of which is shown in figs. 1a and 1b and the second of which is shown in figs. 2a and 2b.

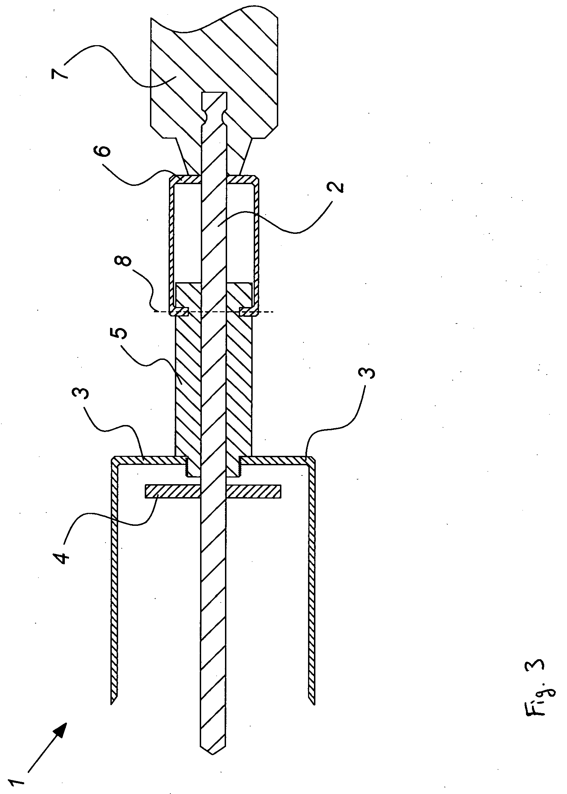

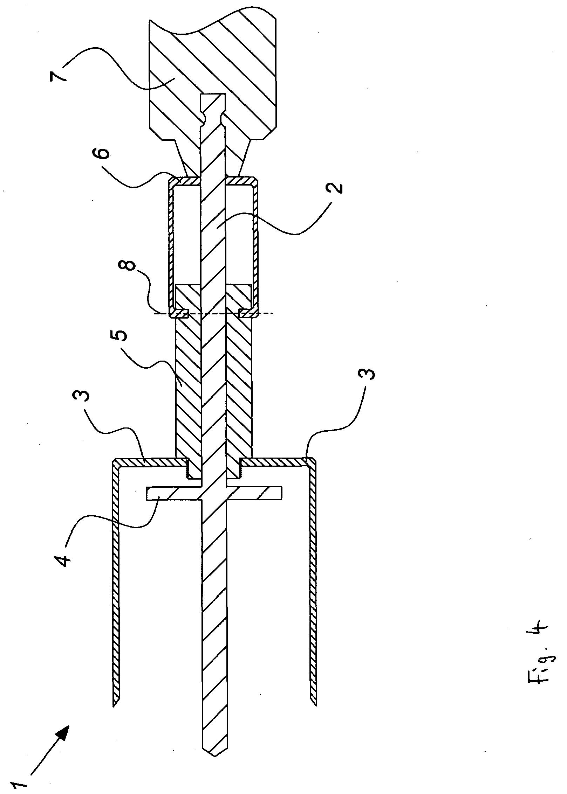

Cross-sectional views of two different variations of this embodiment of the hole saw assembly 1 are shown in figs. 3 and 4, respectively. Apart from the parts already described above, figs. 3 and 4 shows that the hole saw assembly 1 comprises a plug ejector 4, which is fixed to the drill formed by the tool end of the through-going central drill 2 inside the circle formed by the saw blade 3. In the variation shown in fig. 3, the plug ejector 4 is a ring mounted on the drill 2, for instance by means of one or more screws (not shown) protruding into recesses (not shown) formed in the drill surface, whereas in fig. 4, the plug ejector 4 is formed as an integral part of the drill 2.

For using the hole saw assembly 1 illustrated in figs. 1a-4, the mounting piece 5 with the circular saw blade 3 and the pivotal bracket 6 must be mounted around the through-going central drill 2 from the machine end thereof until the mounting piece 5 reaches the ejector plug 4 and is prevented from sliding any longer towards the tool end of the through-going central drill 2. After that, the pivotal bracket 6 is placed in a first position substantially parallel to the through-going central drill 2 so that the bracket 6 constitutes an extension of the mounting piece 5 in the direction of the machine end of the through-going central drill 2. Finally, the machine end of the through-going central drill 2 is inserted into a power tool or a drill chuck 7 of a drilling machine until the bracket 6 abuts the power tool or drill chuck 7 as illustrated in figs. 1a, 1b, 3 and 4. In this way, a longitudinal fixation of the mounting piece 5 and the circular saw blade 3 in relation to the through-going central drill 2 is obtained, because the mounting piece 5 and the bracket 6 extending it are wedged in between the plug ejector 4 at one end and the power tool or the drill chuck 7 at the other end. The circular saw blade 3 now being both rotationally and axially locked to the through-going central drill 2, the saw blade assembly 1 is ready for sawing.

As soon as the circular saw blade 3 has started cutting its way through the material, in which the hole is to be sawn, and the guidance from the through-going central drill 2 is less important, the sawing may be interrupted and the through-going central drill 2 may be replaced by a shorter through-going central drill 2, which does not protrude from the plane defined by the cutting edge of the circular saw blade 3, before the sawing is resumed. Using such a shorter through-going central drill 2, many problems with the through-going central drill 2 interfering with or causing damage to electrical fittings, water pipes or other hidden structures behind the plate, through which the hole is sawn, may be avoided.

After sawing, when a plug of sawn material is caught within the circle formed by the saw blade 3, the pivotal bracket 6 may be moved to a second position substantially perpendicular to the longitudinal axis of the through-going central drill 2 as illustrated in figs. 2a and 2b.

When the bracket 6 is in this second position, the mounting piece 5 and the circular saw blade 3 may be slid towards the machine end of the through-going central drill 2 by means of a hand without releasing the saw blade assembly 1 from the power tool or the drill chuck 7. This motion of the circular saw blade 3 in relation to the through-going central drill 2 and, thereby, the plug ejector 4, will cause the plug ejector 4 to force the plug of sawn material out of the circle formed by the saw blade 3.

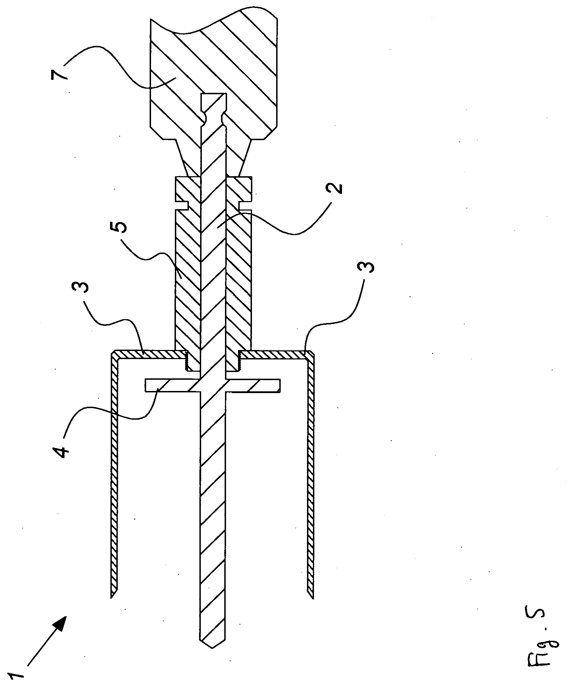

Fig. 5 is a cross-sectional view of a similar hole saw assembly 1 according to another embodiment of the invention. In this case, there is no pivotal bracket, and the through-going central drill 2 must be inserted into the power tool or the drill chuck 7 until the mounting piece 5 abuts the power tool or drill chuck 7 as illustrated in fig. 5. Now, the mounting piece 5 is axially fixed in relation to the through-going central drill 2 by being wedged in between the ejector plug 4 at its one end and the power tool or drill chuck 7 at its other end, and the hole saw assembly 1 is ready for use.

With this embodiment, the hole saw assembly 1 must be released and removed from the power tool or drill chuck 7 before the mounting piece 5 and the circular saw blade 3 can be slid towards the machine end of the through-going central drill 2 for ejecting the plug of sawn material from the circle formed by the saw blade 3.

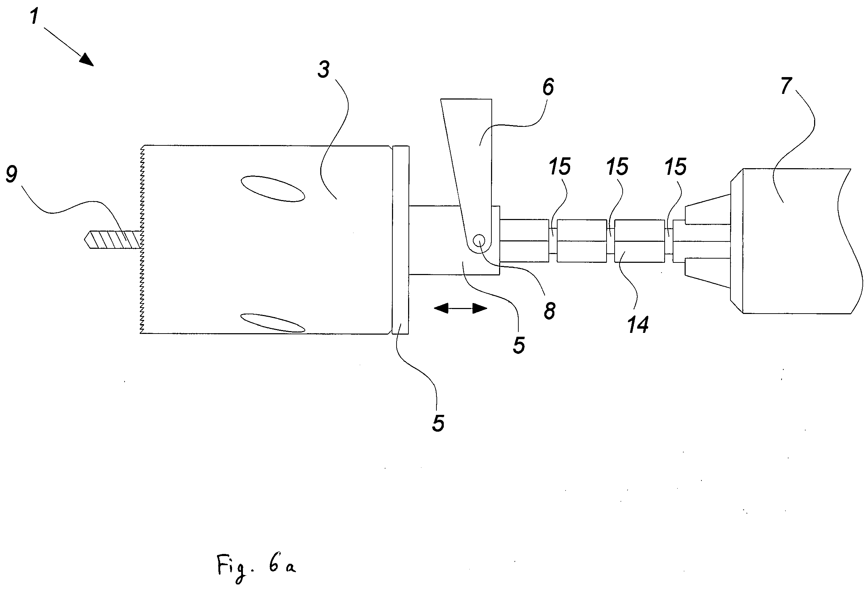

Figs. 6a-6d illustrate schematically a number of side views of another embodiment of the hole saw assembly 1 according to the invention. This embodiment is advantageous in that it combines the simple construction comprising a pivotal bracket 6 with the possibility of releasably fixing the mounting piece 5 to the arbor 14 in different longitudinal positions thereof.

The main differences between this embodiment and the previously described embodiments are that the through-going central drill 2 is replaced by a central drill 9 mounted in the tool end of a hexagonal arbor 14, that the plug ejector 4 is not fixed to the central drill 9 and that the mounting piece 5 may be axially fixed in three different longitudinal positions in relation to the arbor 14.

As for the plug ejector 4, it may consist of a ring, which is placed around the central drill 2 in such a way that the ring can slide along a part 10 of the central drill 9, which is narrower than the rest of the drill. This means that the part 10 of the central drill 9 along which the plug ejector 4 can slide is defined by the mounting piece 5 at one end and by the end of the narrow part 10 of the central drill 9 at the other end.

The cross-sectional dimensions of the hexagonal arbor 14 in this and the following illustrated embodiments may typically be around 10 mm, which is a preferred size for mounting in the drill chuck 7 of a drilling machine. In similar embodiments, however, the cross-sectional dimensions, at least of the part of the arbor 14 closest to the machine end thereof, may correspond to the dimension of well-known drill bits (typically about 7 mm) so that the arbor 14 is suitable for being mounted in a common power tool.

In fig. 6a, the bracket 6 is in a position in which it does not interact with any of the fixation recesses 15 in the surface of the arbor 14. This means that the mounting piece 5 is not locked in the longitudinal direction of the arbor 14 and is slidable along the arbor 14.

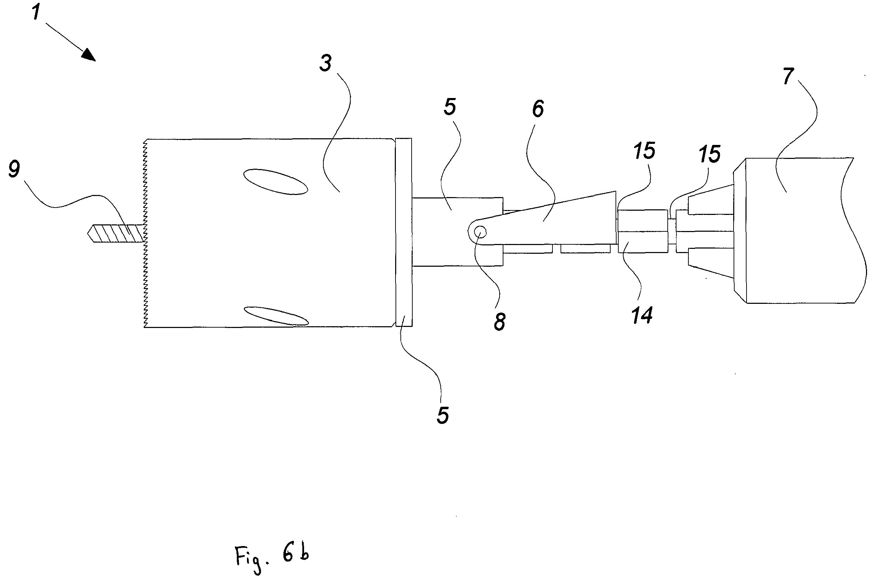

In fig. 6b, the bracket 6 is in another position substantially parallel to the arbor 14, and a part of the bracket 6 protrudes into the midmost of the three fixation recesses 15 made in the surface of the arbor 14. This puts the central drill 9 in a normal working position, in which it protrudes sufficiently from the plane defined by the cutting edge of the saw blade 3 to catch the plate material and work as a guide for the sawing with the circular saw blade 3. The illustrated fixation recesses 15 are sharp edged in order to be able to retain the bracket 6 in the locked position, and they extend all the way around the arbor 14 so that the mounting piece 5 does not have to be oriented rotationally in any specific way in relation to the arbor 14 when being mounted thereon.

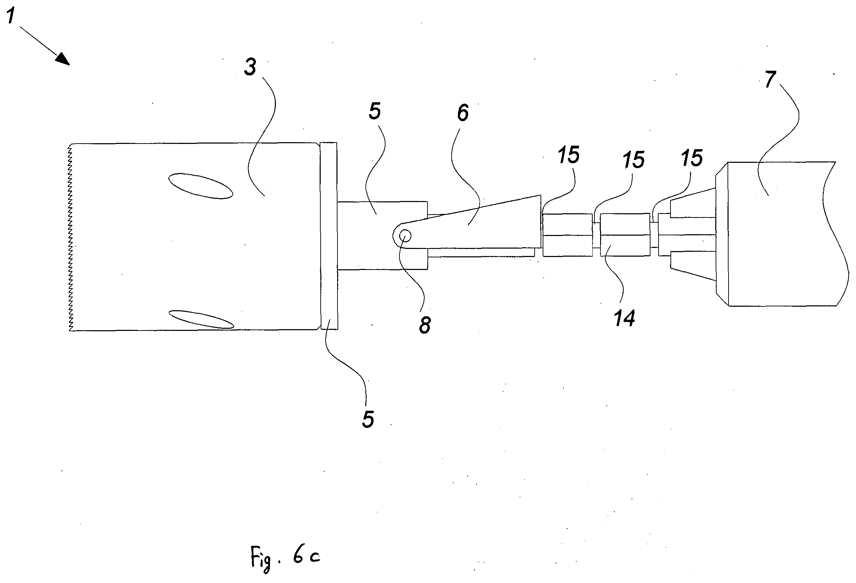

In fig. 6c, the bracket 6 is in the same position in relation to the mounting piece 5 as in fig. 6b, but in this case the protruding part of the bracket 6 instead protrudes into the leftmost of the three fixation recesses 15 made in the surface of the arbor 14. This means that the central drill 9 does not protrude from the plane defined by the cutting edge of the circular saw blade 3 at all. If the central drill 9 is moved to this position in relation to the circular saw blade 3 as soon as the circular saw blade 3 has started cutting its way through the material, in which the hole is to be sawn, and the guidance from the central drill 9 is less important, many problems with the drill 9 interfering with or causing damage to electrical fittings, water pipes or other hidden structures behind the plate, through which the hole is sawn, may be avoided. When put in this position, the mounting piece 5 will force the plug ejector 4 towards the tool end of the central drill 9.

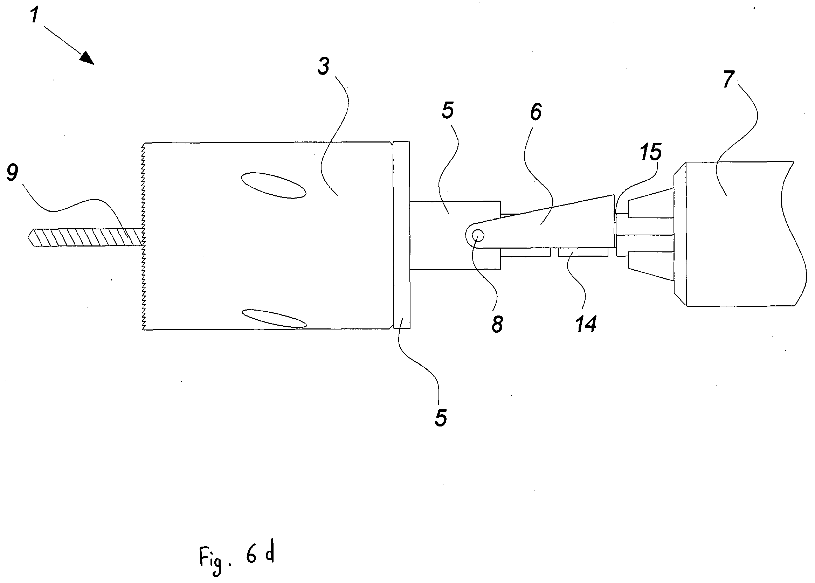

In fig. 6d, the bracket 6 is also in the same position in relation to the mounting piece 5 as in figs. 6b and 6c, but this time the protruding part of the bracket 6 protrudes into the rightmost of the three fixation recesses 15 made in the surface of the arbor 14. This means that, compared to the situation illustrated in fig. 6b, the protrusion of the central drill 9 is extended by the distance between the midmost and the rightmost of the three fixation recesses 15. This position of the central drill 9 is useful, for instance, if the hole is to be made at a joint between two bevelled plates. In this position, the sawn material within the circle formed by the saw blade 3 will force the plug ejector 4 towards the machine end of the central drill 9 during the sawing.

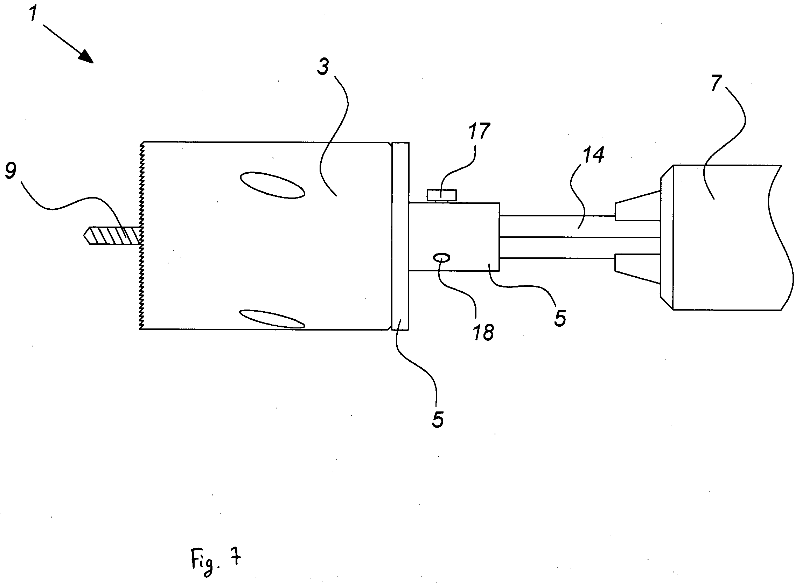

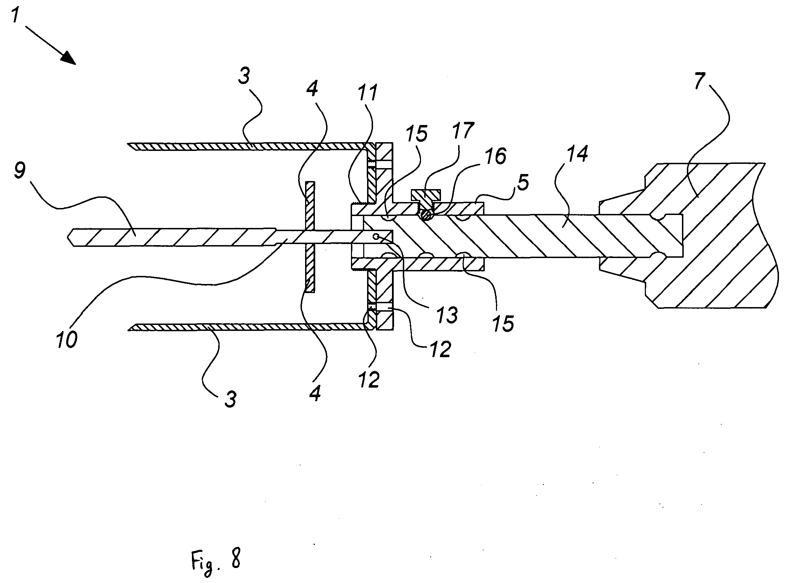

Figs. 7 and 8 show a side view and a cross-sectional view, respectively, of a hole saw assembly 1 according to yet another embodiment of the invention. Like in the previously described embodiment, the through-going central drill 2 is replaced by a central drill 9 mounted in the tool end of a hexagonal arbor 14, the plug ejector 4 is not fixed to the central drill 9 and the mounting piece 5 may be axially fixed in three different positions in relation to the arbor 14. In this embodiment, this last feature is achieved by means of fixation elements 16 in the form of locking balls 16 protruding into fixation recesses 15 formed in the surface of the arbor 14.

In the illustrated embodiment, the central drill 9 is mounted in the tool end of the arbor 14 but in other embodiments, the central drill 9 may be formed as an integral part of the arbor 14 similar to the through-going central drill 2 in the previously described embodiments. However, this will require that the plug ejector 4 is not a solid ring but is instead made in a way so that it can be assembled around the narrow part 10 of the central drill 9.

The illustrated arbor 14 is hexagonal with a cross-sectional dimension of about 10 mm, allowing for an optimal mounting of the arbor 14 in a drill chuck 7 of a drilling machine as shown in figs. 7 and 8. In other embodiments, however, the arbor 14 may have other cross-sectional shapes and/or it may have other dimensions. For instance, the arbor 14 or at least the machine end thereof may have the shape and dimensions of well-known drill bits for an optimal mounting of the arbor 14 in a power tool.

As seen in fig. 8, the mounting piece 5 of the illustrated hole saw assembly 1 has been axially fixed in relation to the arbor 14 by means of a locking ball 16 protruding into the midmost of three fixation recesses 15 made in the surface of the arbor 14. This puts the central drill 9 in a normal working position, in which it protrudes sufficiently from the plane defined by the cutting edge of the saw blade 3 to catch the plate material and work as a guide for the sawing with the circular saw blade 3.

If, instead, the mounting piece 5 were fixed axially in relation to the arbor 14 using the rightmost of the three fixation recesses 15 in the surface of the arbor 14, the protrusion of the central drill 9 would be extended by the distance between the midmost and the rightmost of the three fixation recesses 15. This position of the central drill 9 is useful, for instance, if the hole is to be made at a joint between two bevelled plates. In this case, the sawn material within the circle formed by the saw blade 3 would force the plug ejector 4 towards the machine end of the central drill 9 during the sawing.

If, on the other hand, the mounting piece 5 were fixed axially in relation to the arbor 14 using the leftmost of the three fixation recesses 15 in the surface of the arbor 14, the central drill 9 would not protrude from the plane defined by the cutting edge of the circular saw blade 3 at all. If the central drill 9 is moved to this position in relation to the circular saw blade 3 as soon as the circular saw blade 3 has started cutting its way through the material in which the hole is to be sawn and the guidance from the central drill 9 is less important, many problems with the drill 9 interfering with or causing damage to electrical fittings, water pipes or other hidden structures behind the plate through which the hole is sawn may be avoided. When put in this position, the mounting piece 5 will force the plug ejector 4 towards the tool end of the central drill 9.

Fig. 8 illustrates schematically, how the mounting piece 5 may be fixed by means of a finger screw 17 which, when tightened, presses a locking ball 16 into a fixation recess 15 in the surface of the arbor 14. When the finger screw 17 is loosened, the locking ball 16 may leave the fixation recess 15, and the mounting piece 5 may be slid in the longitudinal direction of the arbor 14.

In order to maintain the alignment between the arbor 14 and the mounting piece 5, a number of spring-loaded locking balls (not shown) may be placed symmetrically around the mounting piece 5 at the same axial position as the finger screw 17. This is indicated schematically by the spring load 18 in fig. 7 being one of two spring loads for locking balls both placed 120° from the finger screw along the circular periphery of the mounting piece 5.

When the mounting piece 5 is not axially locked in relation to the arbor 14, the mounting piece 5 may be slid along the arbor 14 until the spring-loaded locking balls enters one of the fixation recesses 15. The spring loads 18 should be adjusted so that the spring-loaded balls can easily be forced to leave the fixation recesses 15 again by continuing the sliding of the mounting piece along the arbor 14, but also so that this requires a perceptible extra force indicating to the user of the hole saw assembly 1 that the mounting piece 5 is now at one of the predefined fixation positions and the finger screw 17 may be tightened in order to obtain a proper axial fixation of the mounting piece 5.

It should be noted that fig. 8 as well as figs. 9a-11b are schematic and only serves the purpose of illustrating different principles of axial fixation of the mounting piece 5 in relation to the arbor 14. For instance, the bores for the locking balls 16 may be made in a way so that the locking balls 16 do not fall out, when the mounting piece 5 is removed from the arbor 14. For the sake of simplicity, this detail is not illustrated in the figures.

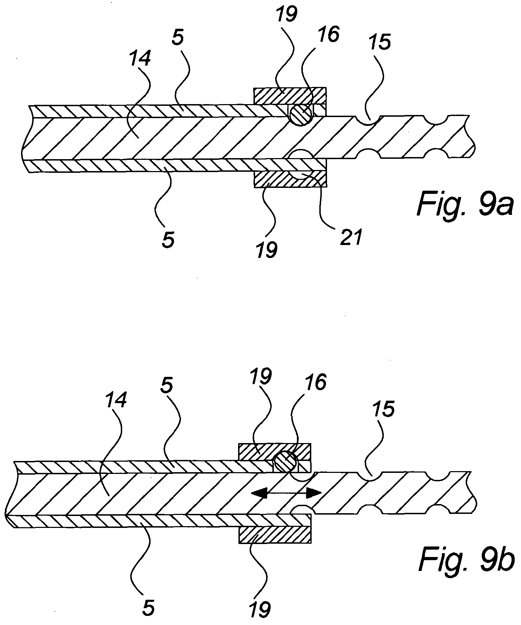

Figs. 9a and 9b illustrates schematically a cross-section of another locking system for the axial fixation of the mounting piece 5 in relation to the arbor 14. In this embodiment, a rotatable locking sleeve 19 is arranged around the mounting piece 5 in a way so that it is axially fixed in relation to the mounting piece 5. The rotatable locking sleeve 19 comprises on its inner surface a fixation element recess 21, which does not extend all the way around the mounting piece 5.

Fig. 9a illustrates a situation in which the fixation element recess 21 is not aligned with the fixation element (i.e. the locking ball) 16. In this case, the rotatable locking sleeve 19 forces the locking ball 16 to protrude into the fixation recess 15 on the surface of the arbor 14, which means that the mounting piece 5 is axially fixed in relation to the arbor 14.

In fig. 9b, the rotatable locking sleeve 19 has been rotated halfway around the mounting piece 5, meaning that the fixation element recess 21 has moved from beneath the arbor 14 (as in fig. 9a) to the position of the locking ball 16 above the arbor 14. Now, the fixation element recess 21 makes room for the locking ball 16 to leave the fixation recess 15, and the mounting piece 5 may be slid along the arbor 14 as indicated by the arrows in the figure.

Just like the embodiment illustrated schematically in fig. 8, the locking system in figs. 9a and 9b may comprise a number of spring-loaded locking balls (not shown) placed symmetrically around the mounting piece 5 at the same axial position as the locking ball 16 controlled by the rotatable locking sleeve 19.

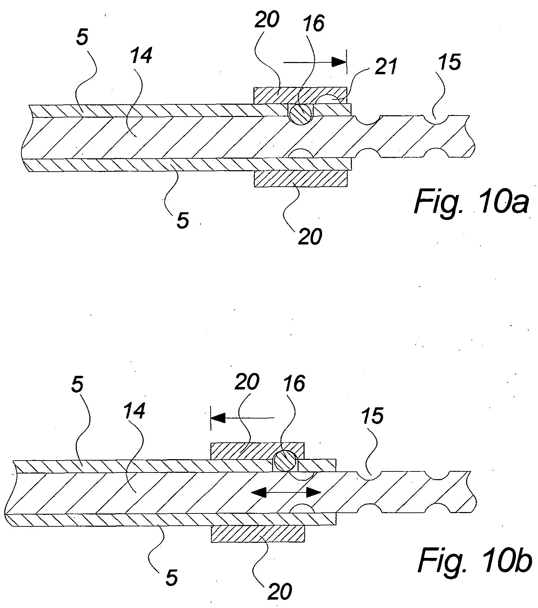

Figs. 10a and 10b illustrates schematically a cross-section of yet another locking system for the axial fixation of the mounting piece 5 in relation to the arbor 14. In this embodiment, a slidable locking sleeve 20 is arranged around the mounting piece 5 in a way so that it is rotationally fixed in relation to the mounting piece 5. The slidable locking sleeve 20 comprises on its inner surface a fixation element recess 21, which does not extend along the full length of the slidable locking sleeve 20.

Fig. 10a illustrates a situation in which the slidable locking sleeve 20 is slid towards a stop in the direction towards the machine end of the arbor 14 as indicated by the arrow in the figure. In this case, the fixation element recess 21 is not aligned with the fixation element (i.e. the locking ball) 16, and the slidable locking sleeve 20 forces the locking ball 16 to protrude into the fixation recess 15 on the surface of the arbor 14, which means that the mounting piece 5 is axially fixed in relation to the arbor 14.

In fig. 10b, the slidable locking sleeve 20 has been slid to a stop in the opposite direction as indicated by the arrow in the figure, meaning that the fixation element recess 21 has moved along the arbor 14 to be aligned with the locking ball 16. Now, the fixation element recess 21 makes room for the locking ball 16 to leave the fixation recess 15, and the mounting piece 5 may be slid along the arbor 14 as indicated by the arrows in the figure.

Just like the embodiment illustrated schematically in figs. 8, 9a and 9b, the locking system in figs. 10a and 10b may comprise a number of spring-loaded locking balls (not shown) placed symmetrically around the mounting piece 5 at the same axial position as the locking ball 16 controlled by the slidable locking sleeve 20.

The embodiments illustrated in figs. 9a-10b comprise a locking sleeve 19, 20, which controls the position or locking status of a single locking ball 16. In other embodiments, however, more than one locking ball 16 (or other types of fixation elements, such as locking pins) may be controlled by means of a single locking sleeve 19, 20.

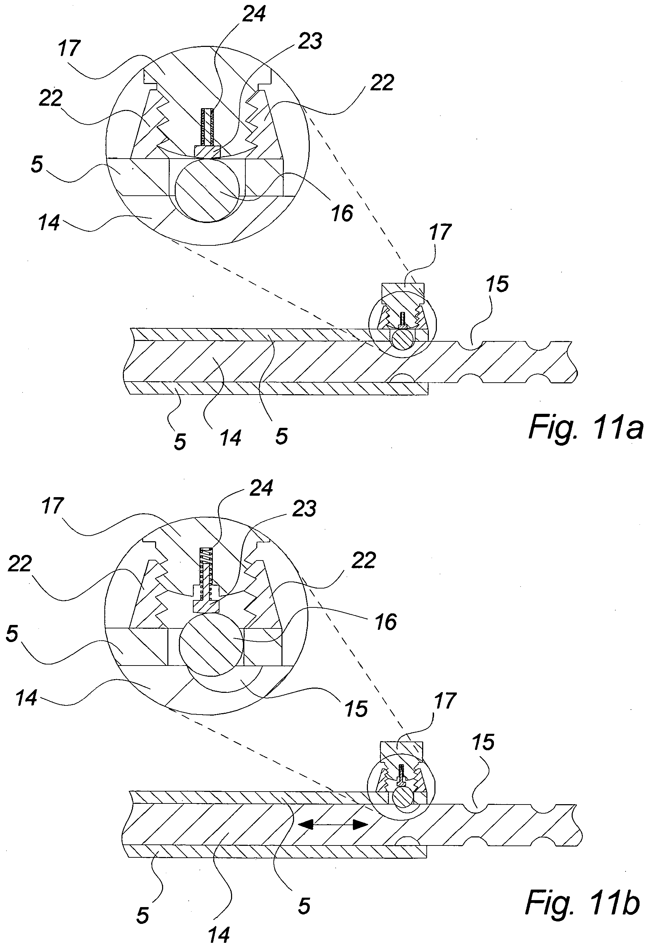

Figs. 11a and 11b illustrates schematically a cross-section of yet another locking system for the axial fixation of the mounting piece 5 in relation to the arbor 14. In this embodiment, which is a more sophisticated variation of the locking system shown in figs. 7 and 8, a finger screw 17 may be tightened for pressing a locking ball 16 into a fixation recess 15 in the surface of the arbor 14 for axially fixing the mounting piece 5 in relation to the arbor 14 and loosened for releasing the locking ball 16 from the fixation recess and allowing the mounting piece 5 to be slid along the arbor 14.

The finger screw 17 in figs. 11a and 11b differs from the one in figs. 7 and 8 in that it is provided with a spring-loaded piston 23, which exerts a certain inwards radial force on the locking ball 16. This means that the locking ball 16 reacts more or less like the other spring-loaded locking balls as described above, when it comes to indicating that the mounting piece 5 is at a predefined axial locking position, and that these other spring-loaded locking balls might be omitted in this embodiment of the hole saw assembly 1. The need for room for the piston 23 and the spring load 24 for the piston 23 inside the finger screw 17 means that the finger screw 17 of this embodiment is larger than the one shown in figs. 7 and 8. Therefore, the finger screw 17 may be mounted in a thread 22, which is arranged externally to the actual mounting piece 5 as indicated in figs. 11a and 11b.

Fig. 11a illustrates a situation in which the finger screw 17 is tightened and forces the locking ball 16 to protrude into the fixation recess 15 on the surface of the arbor 14, which means that the mounting piece 5 is axially fixed in relation to the arbor 14.

In fig. 11b, the finger screw 17 has been loosened, the locking ball 16 can leave the fixation recess 15, and the mounting piece 5 may be slid along the arbor 14 as indicated by the arrows. If the mounting piece 5 is slid a little bit more to the left than shown in fig. 11b, the locking ball 16 will leave the fixation recess 15 completely, and the piston 23 will be pressed further upwards against the spring load 24.

The invention has been exemplified above with reference to specific embodiments. However, it should be understood that the invention is not limited to the particular examples described above but may be designed and altered in a multitude of varieties within the scope of the invention as specified in the claims.

### List of reference numbers

1. Hole saw assembly
2. Through-going central drill
3. Circular saw blade
4. Plug ejector
5. Mounting piece
6. Pivotal bracket
7. Drill chuck
8. Pivot for bracket
9. Central drill
10. Narrow part of central drill
11. Screw thread for mounting of circular saw blade
12. Bore for rotational fixation of circular saw blade
13. Bore for fixation of central drill
14. Hexagonal arbor
15. Fixation recess
16. Locking ball
17. Locking finger screw
18. Spring load for locking ball
19. Rotatable locking sleeve
20. Slidable locking sleeve
21. Fixation element recess
22. Thread for locking finger screw
23. Piston for locking ball
24. Spring load for piston

## Claims

1. A hole saw assembly (1) comprising
an elongated arbor (2; 14) having a machine end and a tool end, the machine end being suitable for being mounted at into a power tool or a drill chuck (7) of a drilling machine,
a mounting piece (5) arranged around the arbor so that the mounting piece is rotationally locked to the arbor but slidable over the arbor in the longitudinal direction thereof,
a circular saw blade (3) mounted on the mounting piece with the cutting edge of the circular saw blade directed towards the tool end of the arbor and so that the rotational axis of the circular saw blade coincides with the longitudinal axis of the arbor,
a central drill (2; 9) extending along the rotational axis of the circular saw blade and being rotationally and axially fixed to the arbor,
means (15-18; 15, 16, 19,21; 15, 16,20,21; 15-17, 22-24) for releasably fixating the mounting piece in relation to the arbor at one or more positions along the longitudinal axis of the arbor and
a plug ejector (4) mounted on the central drill in such a way that the plug ejector may be used for ejecting a plug of sawn material from the interior of the circular saw blade by sliding the mounting piece and the circular saw blade in relation to the central drill in the direction towards the machine end of the arbor, and **characterised in that** the plug ejector is mounted on the central drill in such a way that the plug ejector may work as a stop for the sliding of the mounting piece towards the tool end of the arbor.

2. A hole saw assembly according to claim 1, wherein the mounting piece may be releasably fixed at a first mounting piece position along the longitudinal axis of the arbor, in which the central drill protrudes between 5 mm and 30 mm, preferably between 15 mm and 20 mm, from the plane defined by the cutting edge of the circular saw blade.

3. A hole saw assembly according to claim 1 or 2, wherein the mounting piece may further be releasably fixed at a second mounting piece position along the longitudinal axis of the arbor, in which the central drill protrudes between 20 mm and 75 mm, preferably between 30 mm and 40 mm, from the plane defined by the cutting edge of the circular saw blade.

4. A hole saw assembly according to any of the preceding claims, wherein the mounting piece may further be releasably fixed at a third mounting piece position along the longitudinal axis of the arbor, in which the central drill does not protrude from the plane defined by the cutting edge of the circular saw blade.

5. A hole saw assembly according to any of the preceding claims, wherein the means for fixating the mounting piece in relation to the arbor comprises one or more fixation elements (16), each being positionable in at least two different positions, a first of which positions causes the tool fixation element to protrude into a fixation recess (15) on the surface of the arbor, and a second of which positions causes the tool fixation element not to protrude into such a recess.

6. A hole saw assembly according to claim 5, wherein at least one of the fixation elements is a spring-loaded ball (16) or a spring-loaded pin.

7. A hole saw assembly according to claim 5 or 6, wherein the position of at least one of the fixation elements is controlled by means of an locking sleeve (20), which is slidable in the longitudinal direction of the arbor, which locking sleeve comprises one or more fixation element recesses (21) arranged in such a way that, when the fixation element is aligned with a fixation element recess, it is allowed to be in the second position, whereas, when the fixation element is not aligned with a fixation element recess, the fixation element is kept in the first position, thus fixating the mounting piece in the longitudinal direction of the arbor.

8. A hole saw assembly according to claim 5 or 6, wherein the position of at least one of the fixation elements is controlled by means of an locking sleeve (19), which is rotatable about the arbor, which locking sleeve comprises one or more fixation element recesses (21) arranged in such a way that, when the fixation element is aligned with a fixation element recess, it is allowed to be in the second position, whereas, when the fixation element is not aligned with a fixation element recess, the fixation element is kept in the first position, thus fixating the mounting piece in the longitudinal direction of the arbor.

9. A hole saw assembly according to claim 5 or 6, wherein the position of at least one of the fixation elements is controlled by means of a finger screw (17), the rotational axis of which is perpendicular to the arbor, the finger screw being arranged so that, when the finger screw is loosened, the fixation element is allowed to be in the second position, whereas, when the finger screw is tightened, the fixation element is kept in the first position, thus fixating the mounting piece in the longitudinal direction of the arbor.

10. A hole saw assembly according to any of claims 1-4, wherein the means for releasably fixating the mounting piece in relation to the arbor include the plug ejector, the fixation being obtained by inserting the machine end of the arbor into a power tool or a drill chuck of a drilling machine until the mounting piece abuts the power tool or drill chuck and the mounting piece is wedged in between the plug ejector at one end and the power tool or the drill chuck at the other end.

11. A hole saw assembly according to any of the preceding claims, wherein the ejector plug is fixed to the central drill.

12. A hole saw assembly according to claim 11, wherein the ejector plug is formed as an integral part of the central drill.

13. A hole saw assembly according to any of claims 1-10, wherein the ejector plug is slidable along a part of the central drill.

14. A hole saw assembly according to any of the preceding claims, wherein the central drill is formed as an integral part of the arbor, the central drill being an extension of the arbor at the tool end thereof.

15. A hole saw assembly according to any of the preceding claims, wherein a cross-section of at least a part of the arbor has a hexagonal shape, and the mounting piece is rotationally locked to the arbor by means of a central hole through the mounting piece, the shape and dimensions of which hole corresponds to the shape and dimensions of the cross-section of the arbor.

## Patentansprüche

1. Lochsägeeinheit (1), Folgendes umfassend:
einen langgestreckten Dorn (2; 14), der ein Maschinenende und ein Werkzeugende hat, wobei das Maschinenende dafür geeignet ist, in eine angetriebene Maschine oder ein Bohrfutter (7) einer Bohrmaschine eingespannt zu werden,
ein Halterungsteil (5), das um den Dorn herum angeordnet ist, so dass das Halterungsteil bezüglich Drehungen am Dorn blockiert ist, jedoch über den Dorn in dessen Längsrichtung verschoben werden kann,
ein kreisförmiges Sägeblatt (3), das am Halterungsteil montiert ist, wobei die Schneidkante des kreisförmigen Sägeblatts zum Werkzeugende des Dorns zeigt, derart, dass die Drehachse des kreisförmigen Sägeblatts mit der Längsachse des Dorns zusammenfällt,
eine mittige Bohrspitze (2; 9), die sich entlang der Drehachse des kreisförmigen Sägeblatts erstreckt und die bezüglich Drehungen und axial am Dorn befestigt ist,
ein Mittel (15-18; 15, 16, 19, 21; 15, 16, 20, 21; 15-17, 22-24), um das Halterungsteil relativ zum Dorn in einer oder mehreren Positionen entlang der Längsachse des Dorns entriegelbar zu fixieren, und
einen Pfropfenauswerfer (4), der auf der mittigen Bohrspitze derart montiert ist, dass der Pfropfenauswerfer dafür verwendet werden kann, einen Pfropfen aus ausgesägtem Material aus dem Inneren des kreisförmigen Sägeblatts auszuwerfen, indem das Halterungsteil und das kreisförmige Sägeblatt relativ zur mittigen Bohrspitze in Richtung des Maschinenendes des Dorns verschoben werden, und **dadurch gekennzeichnet, dass** der Pfropfenauswerfer auf der mittigen Bohrspitze derart montiert ist, dass der Pfropfenauswerfer als ein Stopp für das Verschieben des Halterungsteils in Richtung des Werkzeugendes des Dorns funktionieren kann.

2. Lochsägeeinheit nach Anspruch 1, wobei das Halterungsteil an einer ersten Halterungsteilposition entlang der Längsachse des Dorns entriegelbar fixiert werden kann, in der die mittige Bohrspitze von der durch die Schneidkante des kreisförmigen Sägeblatts definierten Ebene zwischen 5 mm und 30 mm hervorsteht und vorzugsweise zwischen 15 mm und 20 mm.

3. Lochsägeeinheit nach Anspruch 1 oder 2, wobei das Halterungsteil außerdem an einer zweiten Halterungsteilposition entlang der Längsachse des Dorns entriegelbar fixiert werden kann, in der die mittige Bohrspitze von der durch die Schneidkante des kreisförmigen Sägeblatts definierten Ebene zwischen 20 mm und 75 mm hervorsteht und vorzugsweise zwischen 30 mm und 40 mm.

4. Lochsägeeinheit nach einem der vorhergehenden Ansprüche, wobei das Halterungsteil außerdem an einer dritten Halterungsteilposition entlang der Längsachse des Dorns entriegelbar fixiert werden kann, in der die mittige Bohrspitze von der durch die Schneidkante des kreisförmigen Sägeblatts definierten Ebene nicht hervorsteht.

5. Lochsägeeinheit nach einem der vorhergehenden Ansprüche, wobei das Mittel zum Fixieren des Halterungsteils relativ zum Dorn ein oder mehrere Fixierungselemente (16) umfasst, von denen jedes in wenigstens zwei unterschiedlichen Positionen positionierbar ist, wobei eine erste von diesen Positionen bewirkt, dass das Werkzeugfixierungselement in eine Fixierungsaussparung (15) auf der Oberfläche des Dorns hinein hervorsteht, und eine zweite von diesen Positionen bewirkt, dass das Werkzeugfixierungselement nicht in eine solche Aussparung hinein hervorsteht.

6. Lochsägeeinheit nach Anspruch 5, wobei wenigstens eines der Fixierungselemente eine feder-vorgespannte Kugel (16) oder ein feder-vorgespannter Stift ist.

7. Lochsägeeinheit nach Anspruch 5 oder 6, wobei die Position wenigstens eines der Fixierungselemente mittels einer Verriegelungsmanschette (20) gesteuert wird, die auf dem Dorn in der Längsrichtung verschiebbar ist, wobei die Verriegelungsmanschette eine oder mehrere Fixierungselement-Aussparungen (21) umfasst, die derart angeordnet sind, dass, wenn das Fixierungselement mit einer Fixierungselement-Aussparungen ausgerichtet ist, es ermöglicht wird, dass es sich in der zweiten Position befindet, wohingegen, wenn das Fixierungselement nicht mit einer Fixierungselement-Aussparungen ausgerichtet ist, das Fixierungselement in der ersten Position gehalten wird, wodurch das Halterungsteil in der Längsrichtung des Dorns fixiert wird.

8. Lochsägeeinheit nach Anspruch 5 oder 6, wobei die Position wenigstens eines der Fixierungselemente mittels einer Verriegelungsmanschette (19) gesteuert wird, die um den Dorn drehbar ist, wobei die Verriegelungsmanschette eine oder mehrere Fixierungselement-Aussparungen (21) umfasst, die derart angeordnet sind, dass, wenn das Fixierungselement mit einer Fixierungselement-Aussparungen ausgerichtet ist, es ermöglicht wird, dass es sich in der zweiten Position befindet, wohingegen, wenn das Fixierungselement nicht mit einer Fixierungselement-Aussparungen ausgerichtet ist, das Fixierungselement in der ersten Position gehalten wird, wodurch das Halterungsteil in der Längsrichtung des Dorns fixiert wird.

9. Lochsägeeinheit nach Anspruch 5 oder 6, wobei die Position wenigstens eines der Fixierungselemente mittels einer handbetätigten Schraube (17) gesteuert wird, deren Drehachse senkrecht zum Dorn ist, wobei die handbetätigte Schraube derart eingerichtet ist, dass, wenn die handbetätigte Schraube gelockert wird, es ermöglicht wird, dass das Fixierungselement sich in der zweiten Position befindet, wohingegen, wenn die handbetätigte Schraube angezogen wird, das Fixierungselement in der ersten Position gehalten wird, wodurch das Halterungsteil in der Längsrichtung des Dorns fixiert wird.

10. Lochsägeeinheit nach einem der Ansprüche 1 bis 4, wobei das Mittel zum entriegelbaren Fixieren des Halterungsteils relativ zum Dorn den Pfropfenauswerfer umfasst, wobei die Fixierung dadurch erreicht wird, dass das Maschinenende des Dorns in eine angetriebene Maschine oder ein Bohrfutter einer Bohrmaschine eingeführt wird, bis das Halterungsteil an der angetriebenen Maschine oder dem Bohrfutter anstößt und das Halterungsteil zwischen dem Pfropfenauswerfer an einem Ende und der der angetriebenen Maschine oder dem Bohrfutter am anderen Ende festgeklemmt ist.

11. Lochsägeeinheit nach einem der vorhergehenden Ansprüche, wobei der Pfropfenauswerfer an der mittigen Bohrspitze fixiert ist.

12. Lochsägeeinheit nach Anspruch 11, wobei der Pfropfenauswerfer als ein integraler Teil der mittigen Bohrspitze ausgebildet ist.

13. Lochsägeeinheit nach einem der Ansprüche 1 bis 10, wobei der Pfropfenauswerfer entlang eines Teils der mittigen Bohrspitze verschiebbar ist.

14. Lochsägeeinheit nach einem der vorhergehenden Ansprüche, wobei die mittige Bohrspitze als ein integraler Teil des Dorns ausgebildet ist und die mittige Bohrspitze eine Verlängerung des Dorns an dessen Werkzeugende ist.

15. Lochsägeeinheit nach einem der vorhergehenden Ansprüche, wobei ein Querschnitt wenigstens eines Teils des Dorns eine hexagonale Form hat und das Halterungsteil mittels eines mittigen Lochs durch das Halterungsteil am Dorn bezüglich Drehungen blockiert ist, wobei die Form und Abmessungen des Lochs der Form und den Abmessungen des Dornquerschnitts entsprechen.

## Revendications

1. Ensemble de scie-cloche (1) comprenant
un arbre allongé (2 ; 14) présentant une extrémité de machine et une extrémité d'outil, l'extrémité de machine étant adaptée pour être montée dans un outil motorisé ou un mandrin de perceuse (7) d'une perceuse,
une pièce de montage (5) agencée autour de l'arbre de sorte que la pièce de montage soit verrouillée en rotation sur l'arbre mais puisse coulisser sur l'arbre dans la direction longitudinale de celui-ci,
une lame de scie circulaire (3) montée sur la pièce de montage avec l'arête de coupe de la lame de scie circulaire dirigée vers l'extrémité d'outil de l'arbre et de sorte que l'axe de rotation de la lame de scie circulaire coïncide avec l'axe longitudinal de l'arbre,
un foret central (2; 9) s'étendant le long de l'axe de rotation de la lame de scie circulaire et étant fixé de manière à pouvoir tourner et axiale à l'arbre,
des moyens (15-18; 15, 16, 19, 21; 15, 16, 20, 21; 15-17, 22-24) pour la fixation détachable de la pièce de montage par rapport à l'arbre sur une ou plusieurs positions le long de l'axe longitudinal de l'arbre et
un éjecteur de bouchon (4) monté sur le foret central de telle manière que l'éjecteur de bouchon puisse être utilisé pour éjecter un bouchon de matériau scié de l'intérieur de la lame de scie circulaire par coulissement de la pièce de montage et de la lame de scie circulaire par rapport au foret central dans la direction vers l'extrémité de machine de l'arbre, et **caractérisé en ce que** l'éjecteur de bouchon est monté sur le foret central de telle manière que l'éjecteur de bouchon puisse servir de butée pour le coulissement de la pièce de montage vers l'extrémité d'outil de l'arbre.

2. Ensemble de scie-cloche selon la revendication 1, dans lequel la pièce de montage peut être fixée de manière détachable sur une première position de pièce de montage le long de l'axe longitudinale de l'arbre, dans laquelle le foret central fait saillie entre 5 mm et 30 mm, de préférence entre 15 mm et 20 mm, du plan défini par l'arête de coupe de la lame de scie circulaire.

3. Ensemble de scie-cloche selon la revendication 1 ou 2, dans lequel la pièce de montage peut en outre être fixée de manière détachable sur une deuxième position de pièce de montage le long de l'axe longitudinal de l'arbre, dans laquelle le foret central fait saillie entre 20 mm et 75 mm, de préférence entre 30 mm et 40 mm, du plan défini par l'arête de coupe de la lame de scie circulaire.

4. Ensemble de scie-cloche selon l'une quelconque des revendications précédentes, dans lequel la pièce de montage peut en outre être fixée de manière détachable sur une troisième position de pièce de montage le long de l'axe longitudinal de l'arbre, dans laquelle le foret central ne fait pas saillie du plan défini par l'arête de coupe de la lame de scie circulaire.

5. Ensemble de scie-cloche selon l'une quelconque des revendications précédentes, dans lequel les moyens pour fixer la pièce de montage par rapport à l'arbre comprennent un ou plusieurs éléments de fixation (16), chacun étant positionnable dans au moins deux positions différentes, dont une première de ces positions position amène l'élément de fixation d'outil à faire saillie dans un évidement de fixation (15) sur la surface de l'arbre et une seconde de ces positions amène l'élément de fixation d'outil à ne pas faire saillie dans un tel évidement.

6. Ensemble de scie-cloche selon la revendication 5, dans lequel au moins un des éléments de fixation est une bille à ressort (16) ou un boulon à ressort.

7. Ensemble de scie-cloche selon la revendication 5 ou 6, dans lequel la position d'au moins un des éléments de fixation est commandée à l'aide d'un manchon de verrouillage (20) qui est coulissant dans la direction longitudinale de l'arbre, lequel manchon de verrouillage comprend un ou plusieurs évidements d'élément de fixation (21) agencés de telle manière que lorsque l'élément de fixation est aligné sur un évidement d'élément de fixation, il puisse être dans la seconde position, alors que lorsque l'élément de fixation n'est pas aligné sur un évidement d'élément de fixation, l'élément de fixation est maintenu dans la première position, fixant ainsi la pièce de montage dans la direction longitudinale de l'arbre.

8. Ensemble de scie-cloche selon la revendication 5 ou 6, dans lequel la position d'au moins un des éléments de fixation est commandée à l'aide d'un manchon de verrouillage (19) qui peut tourner autour de l'arbre, lequel manchon de verrouillage comprend un ou plusieurs évidements d'élément de fixation (21) agencés de telle manière que lorsque l'élément de fixation est aligné sur un évidement d'élément de fixation, il puisse être dans la seconde position, alors que lorsque l'élément de fixation n'est pas aligné sur un évidement d'élément de fixation, l'élément de fixation est maintenu dans la première position, fixant ainsi la pièce de montage dans la direction longitudinale de l'arbre.

9. Ensemble de scie-cloche selon la revendication 5 ou 6, dans lequel la position d'au moins un des éléments de fixation est commandée à l'aide d'une vis à serrage à main (17), dont l'axe de rotation est perpendiculaire à l'arbre, la vis à serrage à main étant agencée de sorte que lorsque la vis à serrage à main est desserrée, l'élément de fixation est autorisé à être dans la deuxième position, alors que lorsque la vis à serrage à main est serrée, l'élément de fixation est maintenu dans la première position, fixant ainsi la pièce de montage dans la direction longitudinale de l'arbre.

10. Ensemble de scie-cloche selon l'une quelconque des revendications 1 à 4, dans lequel les moyens pour la fixation détachable de la pièce de montage par rapport à l'arbre incluent l'éjecteur de bouchon, la fixation étant obtenue par l'insertion de l'extrémité de machine de l'arbre dans un outil motorisé ou un mandrin de perceuse d'une perceuse jusqu'à ce que la pièce de montage bute contre l'outil motorisé ou le mandrin de perceuse et la pièce de montage soit calée entre l'éjecteur de bouchon sur une extrémité et l'outil motorisé ou le mandrin de perceuse sur l'autre extrémité.

11. Ensemble de scie-cloche selon l'une quelconque des revendications précédentes, dans lequel l'éjecteur de bouchon est fixé au foret central.

12. Ensemble de scie-cloche selon la revendication 11, dans lequel l'éjecteur de bouchon est une partie intégrante du foret central.

13. Ensemble de scie-cloche selon l'une quelconque des revendications 1 à 10, dans lequel l'éjecteur de bouchon est coulissant le long d'une partie du foret central.

14. Ensemble de scie-cloche selon l'une quelconque des revendications précédentes, dans lequel le foret central est formé comme une partie intégrante de l'arbre, le foret central étant une extension de l'arbre sur l'extrémité d'outil de celui-ci.

15. Ensemble de scie-cloche selon l'une quelconque des revendications précédentes, dans lequel une section transversale d'au moins une partie de l'arbre a une forme hexagonale et la pièce de montage est verrouillée en rotation sur l'arbre à l'aide d'un trou central dans la pièce de montage, dont la forme et les dimensions du trou correspondent à la forme et aux dimensions de la section transversale de l'arbre.
